# FASCICULE DE BREVET EUROPEEN

(11) **EP 3 727 820 B1**
(45) Date de publication et mention de la délivrance du brevet: **30.08.2023**
(21) Numéro de dépôt: 18826423.8
(22) Date de dépôt: 28.11.2018
(51) Int. Cl.: B29D 30/06

(54) **ASSEMBLAGE D'UNE LAMELLE**
LAMELLENBLATTANORDNUNG
SIPE BLADE ASSEMBLY

(30) Priorité: 18.12.2017 FR 1762364
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: CHIGROS, Pierre, 63040 CLERMONT-FERRAND Cedex 9 (FR); BARDIN, Damien, 63040 CERMONT-FERRAND Cedex 9 (FR)
(74) Mandataire: Noel, Luminita
(86) Numéro de dépôt international: PCT/FR2018/053023
(87) Numéro de publication internationale: WO 2019/122561

(56) Documents cités:
- EP-A1- 0 858 875
- WO-A1-2015/086974
- WO-A1-2017/102499
- US-B1- 6 193 492

## Description

### DOMAINE TECHNIQUE

La présente invention concerne le domaine technique des pneumatiques et plus particulièrement un ensemble d'éléments de moule pour le moulage de découpures dans une bande de roulement d'un pneumatique, en particulier, l'invention concerne un ensemble d'éléments de moule formant un réseau d'éléments de moule selon la revendication 1.

La partie moulant la bande de roulement des moules de cuisson est constitués d'une pluralité d'éléments permettant d'obtenir des cavités ou des incisions dans la bande de roulement. Pour des raisons de performance du pneu mais également de tenue mécanique dans le moule, les incisions sont imbriquées les unes dans les autres.

### ETAT DE LA TECHNIQUE

On connaît du document FR2939712 un réseau de cordons et de lamelles fabriqué d'un seul tenant par frittage laser. Ces cordons et lamelles permettent le moulage d'un pneu avec des découpures dans la bande de roulement. Ces cordons et ces lamelles permettent de créer des reliefs qui améliorent l'adhérence du pneu.

Cependant ce réseau de cordons et de lamelles a une taille importante, il peut donc être soumis à des déformations non négligeables, notamment au cours de sa fabrication, ce qui le fait sortir des tolérances acceptables. Sa taille nécessite des moyens volumineux lors de la fabrication. D'autre part, lorsqu'il y a un défaut sur la pièce, elle doit être rebutée en totalité ce qui présente un cout relativement important.
Le document WO 2017/102499 concerne un élément de garniture composite pour moule de pneumatique prévu pour former des découpures ou sculptures dans la bande de roulement présentant une épaisseur importante.

D'autre part, les nouvelles sculptures des pneumatiques qui permettent d'obtenir de meilleures performances comportent des rainures trop fines pour être réalisées avec les techniques actuelles, notamment en aluminium. Ces rainures doivent donc être réalisées avec des lamelles. Mais, sur les sculptures comportant cordons fins et des lamelles transversales, il n'est pas possible d'implanter de lamelles transversales au niveau du cordon fin et ainsi de garantir leur tenue en exploitation.

Un autre art antérieur, la demande WO2015086974 enseigne que ces imbrications sont réalisées à l'aide de fentes de réceptions positionnées dans des parties massives (gouttes d'eau, puits, etc...).

Ces fentes de réceptions rajoutent du vide dans la bande de roulement du pneumatique, ce qui peut être non souhaité lors de la définition de la sculpture.

Il existe donc un besoin de trouver une solution permettant d'obtenir un réseau de cordons et de lamelles respectant les tolérances de fabrication, qui soit simple et pratique à fabriquer, dont les éléments soient de taille raisonnable et qui ne créent pas de creux non désirés dans la bande de roulement.

### DEFINITIONS

Par « pneumatique », on entend tous les types de bandages élastiques soumis à une pression interne ou non.

Par « bande de roulement » d'un pneumatique, on entend une quantité de matériau en caoutchouc délimitée par des surfaces latérales et par deux surfaces principales dont l'une est destinée à entrer en contact avec une chaussée lorsque le pneumatique roule et l'autre est orienté vers l'intérieur du pneu.

Par « découpure dans une bande de roulement » on entend soit une rainure, soit une incision.

Par « rainure », on entend une découpure dans la bande de roulement délimitant des parois de matière, la largeur de cette découpure est telle que les parois associées à cette découpure ne peuvent pas venir en contact l'une contre l'autre dans des conditions usuelles de roulage. La largeur pour une rainure est supérieure à 2 millimètres. Les rainures sont moulées par des éléments de moule dénommés ci-après cordons.

Par « incision », on entend une découpure dans la bande de roulement délimitant des parois de matière, la largeur de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres et supérieure ou égale à 0,2 mm. Les incisions sont moulées par des éléments de moule dénommés ci-après lamelles.

Par « élément de moule », on entend un élément apte à être disposé dans un moule destiné à la vulcanisation d'un pneumatique afin de réaliser des découpures dans ledit pneumatique.

Par « hauteur », on entend la dimension perpendiculaire au fond du moule correspondant à la bande de roulement.

Par "épaisseur de la lamelle" on entend la dimension perpendiculaire à la longueur et la hauteur de la lamelle.

Par « base », on entend la surface parallèle au fond du moule et en contact avec celui-ci. La base a une « largeur » et une « longueur » qui sont perpendiculaires à la hauteur.

### RESUME DE L'INVENTION

L'ensemble d'éléments de moule selon l'invention comprend des lamelles principales et secondaires, il est destiné à être rapporté dans un moule pour la vulcanisation d'une bande de roulement d'un pneumatique, lesdits éléments de moule étant aptes à mouler des découpures dans la bande de roulement et il est caractérisé en ce qu'une lamelle principale comporte au moins un moyen d'assemblage d'une lamelle secondaire, ledit moyen d'assemblage comprenant deux séries d'au moins une protubérance, les deux séries étant disposées en vis-à-vis selon la hauteur de la lamelle principale de manière à former un espacement constant entre la au moins une protubérance de la première série et la au moins une protubérance de la deuxième série, l'espacement étant prévu pour recevoir la lamelle secondaire. On peut ainsi assurer un positionnement relatif et un assemblage résistant aux sollicitations mécaniques sur toute la hauteur de la lamelle lors du moulage/démoulage, tout en minimisant le volume de matière ajouté. Cet assemblage est peu visible sur le pneumatique.

Selon une caractéristique particulière, les protubérances en vis-à-vis sont décalées selon la longueur de la lamelle principale. Ceci permet d'assembler une lamelle ondulée sur toute sa longueur. Actuellement, on doit avoir une zone droite en bord de lamelle pour favoriser l'assemblage. Ce qui simplifie le travail des moulistes.

Avantageusement, les deux séries de protubérances en vis-à-vis sont espacées l'une de l'autre d'une distance légèrement supérieure à l'épaisseur de la lamelle secondaire. On peut ainsi facilement insérer la lamelle secondaire.

Selon une autre caractéristique, les protubérances d'une série sont distantes d'un pas variable. Il est ainsi possible d'adapter le moyen d'assemblage à différentes formes de lamelles.

Avantageusement, les protubérances représentent 1% du poids de l'ensemble d'éléments moulant.

Selon une disposition particulière, les protubérances sont biseautées. Cela permet d'améliorer le blocage de la lamelle et de mieux s'adapter à sa géométrie.

Selon une autre disposition, les séries de protubérances sont présentent une inclinaison. On peut ainsi avoir un angle entre la lamelle secondaire et la lamelle principale.

Selon un autre mode de réalisation, les protubérances sont de formes cubique, pyramidale, sphérique, demi-sphérique ou en forme de U.

L'invention a également pour objet un moule comprenant l'ensemble des éléments de moule avec au moins une des caractéristiques précédentes. Les éléments de moule pourront être par exemple ancrés dans le moule ou collés dans le moule.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la figure 1 est une vue d'un ensemble de lamelles de l'état de la technique,
- la figure 2 est une vue d'un ensemble de lamelles selon l'invention,
- la figure 3 montre un exemple de protubérances d'une lamelle primaire selon l'invention ;
- les figures 4, 4a et 4b illustrent d'autres exemples de protubérances d'une lamelle primaire selon l'invention;
- la figure 5 détaille le montage d'une lamelle secondaire sur une lamelle primaire de l'exemple de la figure 4b;
- les figures 6, 7 et 8 sont une variante de la figure 5;
- la figure 9 montre une lamelle avec sa zone d'ancrage
- les figures 10 et 11 sont des vues en coupe des protubérances selon deux modes de réalisation.

Dans la description qui va suivre, des éléments sensiblement identiques ou similaires seront désignés par des références identiques.

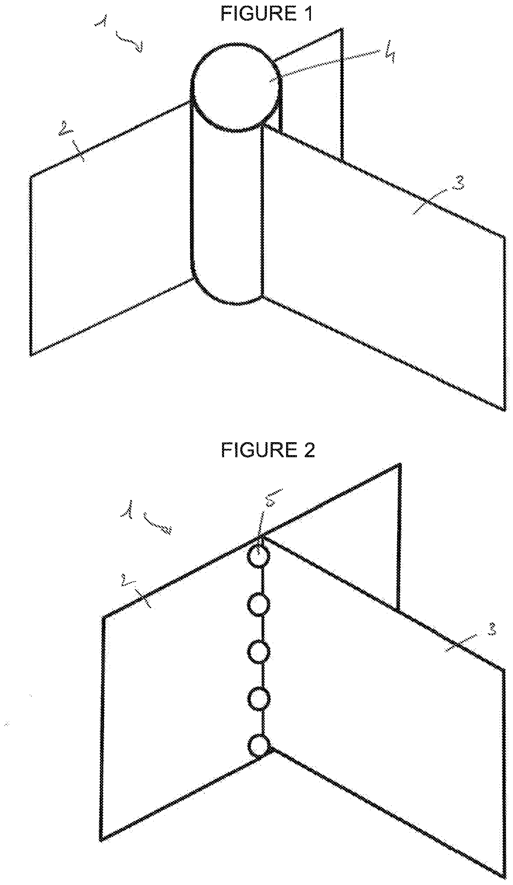

L'ensemble 1 d'éléments de moule de l'état de la technique, illustré figure 1, comprend une lamelle principale 2 et une lamelle secondaire 3 reliées entre elles dans des fentes de réceptions disposées dans une partie 4 en relief sur la lamelle principale 2. La partie 4 étant fendue, elle présente un volume relativement important.

Dans l'ensemble 1 selon l'invention, visible figure 2, la partie 4 a été remplacée par plusieurs protubérances 5 disposées en vis-à-vis. Ces protubérances 5 sont de taille réduite. Dans un mode de réalisation non limitatif, les protubérances ne représentent que 5 à 20% de la lamelle principale 2. Dans une autre variante de réalisation non limitative, les protubérances représentent au moins 1% du poids de l'ensemble 1.

La lamelle principale 2 peut présenter une zone d'ancrage 20.

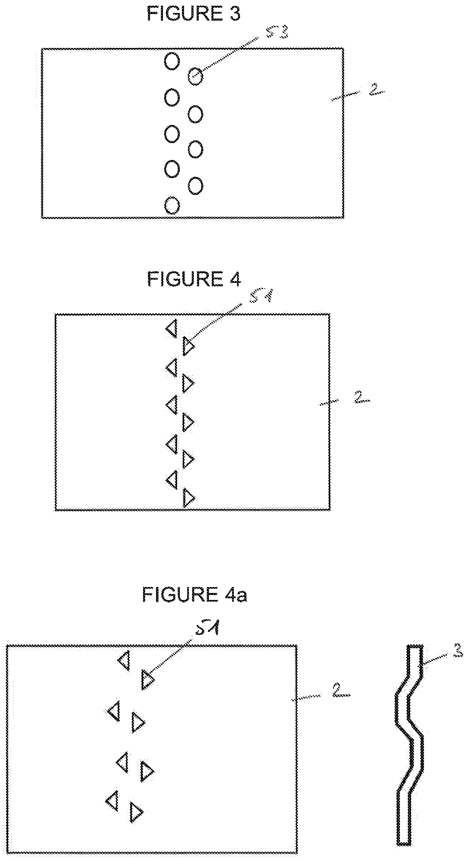

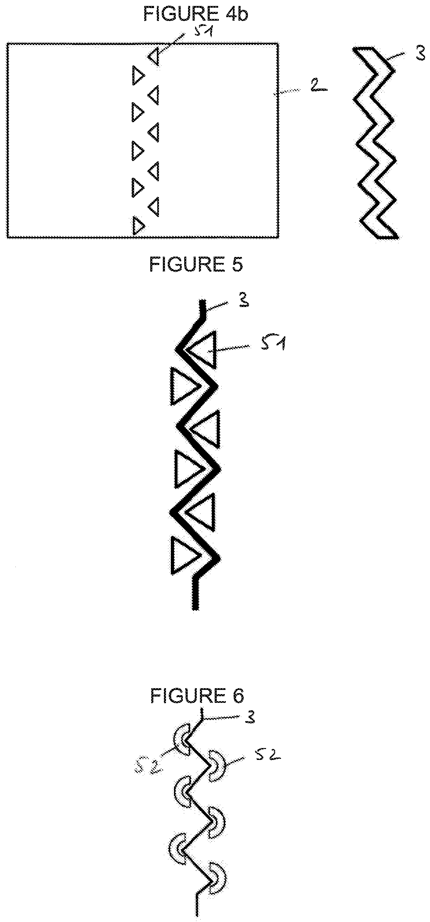

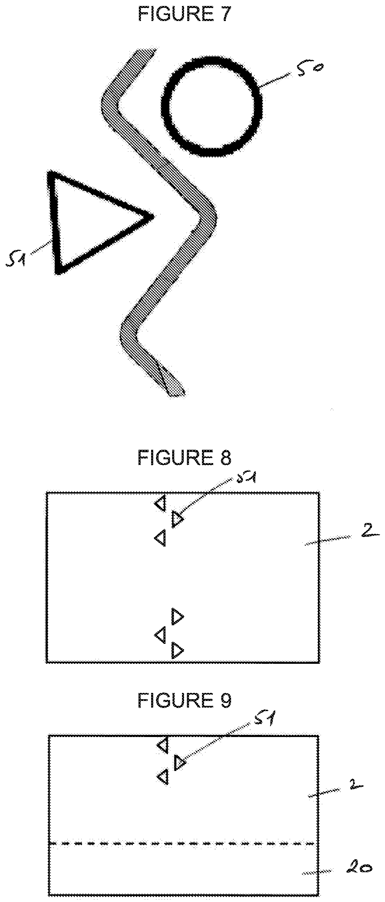

Les protubérances 5 peuvent avoir des formes variées: circulaires 53 (figure 3), pyramidales 51 (figures 4, 4a et 4b), coniques, cubiques 50, en demi-cercles, en forme de U 52 (figure 6), etc... Il est possible de combiner des formes différentes sur une même lamelle principale 2 (figure 7). La forme de la protubérance peux être complémentaire d'une autre forme de l'objet à assembler afin d'avoir un blocage supplémentaire.

Les protubérances peuvent être décalées latéralement par paire les unes avec les autres si la lamelle n'est pas droite afin de suivre le profil de la lamelle 3, comme illustré figure 4a.

Les protubérances 5 sont alignées verticalement sur la lamelle principale 2 et peuvent éventuellement se chevaucher (figures 5 et 7) afin d'insérer une lamelle secondaire 3 ondulée ou en zigzag. Elles pourront être disposées sur toute la hauteur de la lamelle principale 2 ou sur une partie de celle-ci. Plus la hauteur des séries de protubérances 4 sera haute meilleure sera le maintien de la lamelle secondaire 3. Les protubérances 4 pourront avoir un pas constant ou un pas variable.

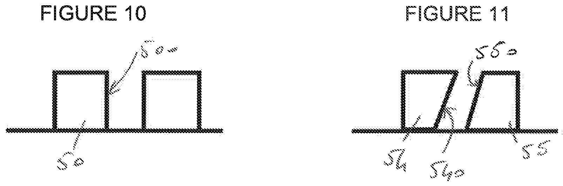

Les protubérances 5 en vis-à-vis peuvent avoir des bords verticaux 500 (figure 10) ou inclinés 540, 550 (figure 11). Dans ce dernier cas, les bords 540 et 550 de chaque protubérance 54 et 55 sont inclinés du même côté afin d'avoir un espacement constant entre les deux bords et garantir la tenue de la lamelle secondaire 3. L'inclinaison du bord définira l'angle entre la lamelle principale 2 et la lamelle secondaire 3.

Le nombre de protubérances 5 dans la hauteur de la lamelle principale 2 est d'au moins une protubérance par série de protubérances c'est-à-dire au moins une protubérance d'un côté et au moins une protubérance de l'autre côté. Dans ce cas il faut préférentiellement placer ces protubérances 4 le plus éloigné possible de la zone d'ancrage 20 de la lamelle principale 2. Dans une mode de réalisation non limitatif, une série de protubérances comprend au moins deux protubérances. Dans un autre mode de réalisation non limitatif, les deux séries de protubérances comprennent au moins deux protubérances.

Dans le cas où la lamelle secondaire 3 est ondulée, il est possible de bloquer les ondulations dans des creux des protubérances 5 (formes en U) ou sur des pointes (formes pyramidales ou circulaires).

Les lamelles ondulées ont, en général, une épaisseur minimum de 0,2mm, une épaisseur maximum de 10mm. De façon préférentielle les lamelles ont une épaisseur <2mm, car pour les lamelles plus épaisses, on peut inclure le moyen d'assemblage dans l'épaisseur de la lamelle.

Les protubérances 5 auront, de préférence, des dimensions d'au moins 1.5mm de côté. Les protubérances 5 peuvent être réalisées par soudage sur la lamelle principale 2, par frittage laser ou encore par emboutissage.

L'invention n'est pas limitée aux exemples décrits et représentés et diverses modifications peuvent y être apportées sans sortir des revendications qui suivent.

## Revendications

1. Ensemble d'éléments de moule (1), comprenant des lamelles principales (2) et secondaires (3), destiné à être rapporté dans un moule pour la vulcanisation d'une bande de roulement d'un pneumatique, lesdits éléments de moule (1) étant aptes à mouler des découpures dans la bande de roulement **caractérisé en ce qu'**une lamelle principale (2) comporte au moins un moyen d'assemblage d'une lamelle secondaire (3), ledit moyen d'assemblage comprenant deux séries d'au moins une protubérance (5), les deux séries étant disposées en vis-à-vis selon la hauteur de la lamelle principale (2) de manière à former un espacement constant entre la au moins une protubérance (5) de la première série et la au moins une protubérance (5) de la deuxième série, l'espacement étant prévu pour recevoir la lamelle secondaire (3).

2. Ensemble d'éléments de moule (1) selon la revendication 1, **caractérisé en ce qu'**au moins une série comporte au moins deux protubérances (5), et **en ce que** les protubérances (5) d'une même série sont sensiblement alignées verticalement sur la lamelle principale (2).

3. Ensemble d'éléments de moule (1) selon l'une quelconque des revendications précédentes, **caractérisé en ce que** les protubérances (5) en vis-à-vis sont décalées selon la longueur de la lamelle principale (2).

4. Ensemble d'éléments de moule (1) selon l'une quelconque des revendications précédentes, **caractérisé en ce que** les protubérances (5) d'une même série sont distantes d'un pas variable.

5. Ensemble d'éléments de moule (1) selon l'une quelconque des revendications précédentes, **caractérisé en ce que** les protubérances (5) sont biseautées.

6. Ensemble d'éléments de moule (1) selon l'une quelconque des revendications précédentes, **caractérisé en ce que** les séries de protubérances (52, 53) présentent une inclinaison.

7. Ensemble d'éléments de moule (1) selon l'une quelconque des revendications précédentes, **caractérisé en ce que** les protubérances sont de formes cubique (50), pyramidale (51), sphérique (53), demi-sphérique ou en forme de U (52).

8. Ensemble d'éléments de moule (1) selon l'une des revendications précédentes, **caractérisé en ce que** les protubérances (5) ne représentent que 5 à 20% du poids de la lamelle principale (2).

9. Moule comprenant un ensemble d'éléments de moule (1) selon l'une des revendications précédentes.

## Patentansprüche

1. Anordnung von Formelementen (1), umfassend Haupt- (2) und Nebenlamellen (3), die dazu bestimmt sind, in eine Form zur Vulkanisierung eines Laufstreifens eines Reifens eingesetzt zu werden, wobei die Formelemente (1) dazu geeignet sind, Ausschnitte im Laufstreifen zu formen, **dadurch gekennzeichnet, dass** eine Hauptlamelle (2) mindestens ein Mittel zur Verbindung einer Nebenlamelle (3) aufweist, wobei das Verbindungsmittel zwei Reihen von mindestens einem Vorsprung (5) umfasst, wobei die beiden Reihen entlang der Höhe der Hauptlamelle (2) gegenüberliegend angeordnet sind, so dass sie zwischen dem mindestens einen Vorsprung (5) der ersten Reihe und dem mindestens einen Vorsprung (5) der zweiten Reihe einen konstanten Abstand bilden, wobei der Abstand dazu vorgesehen ist, die Nebenlamelle (3) aufzunehmen.

2. Anordnung von Formelementen (1) nach Anspruch 1, **dadurch gekennzeichnet, dass** mindestens eine Reihe mindestens zwei Vorsprünge (5) aufweist und dass die Vorsprünge (5) einer selben Reihe im Wesentlichen vertikal auf die Hauptlamelle (2) ausgerichtet sind.

3. Anordnung von Formelementen (1) nach einem der vorangehenden Ansprüche, **dadurch gekennzeichnet, dass** die gegenüberliegenden Vorsprünge (5) entlang der Länge der Hauptlamelle (2) versetzt sind.

4. Anordnung von Formelementen (1) nach einem der vorangehenden Ansprüche, **dadurch gekennzeichnet, dass** die Vorsprünge (5) einer selben Reihe um einen variablen Abstand beabstandet sind.

5. Anordnung von Formelementen (1) nach einem der vorangehenden Ansprüche, **dadurch gekennzeichnet, dass** die Vorsprünge (5) abgeschrägt sind.

6. Anordnung von Formelementen (1) nach einem der vorangehenden Ansprüche, **dadurch gekennzeichnet, dass** die Reihen von Vorsprüngen (52, 53) eine Neigung aufweisen.

7. Anordnung von Formelementen (1) nach einem der vorangehenden Ansprüche, **dadurch gekennzeichnet, dass** die Vorsprünge kubisch (50), pyramidenförmig (51), kugelförmig (53), halbkugelförmig oder U-förmig (52) sind.

8. Anordnung von Formelementen (1) nach einem der vorangehenden Ansprüche, **dadurch gekennzeichnet, dass** die Vorsprünge (5) nur 5 bis 20 % des Gewichts der Hauptlamelle (2) ausmachen.

9. Form, umfassend eine Anordnung von Formelementen (1) nach einem der vorangehenden Ansprüche.

## Claims

1. Set of mould elements (1), comprising main blades (2) and secondary blades (3), intended to be added to a mould for vulcanizing a tread of a tyre, said mould elements (1) being capable of moulding cuts in the tread, **characterized in that** a main blade (2) comprises at least one assembly means for assembling a secondary blade (3), said assembly means comprising two series of at least one protrusion (5), the two series being arranged facing one another on the height direction of the main blade (2) in order to have a constant spacing between the at least one protrusion (5) of the first series and the at least one protrusion (5) of the second series, the spacing being designed to receive the secondary blade (3).

2. Set of moulding elements (1) according to claim 1, **characterized in that** at least one series comprises at least two protrusions (5) and **in that** the protrusions (5) of the same series are substantially aligned vertically on the main blade (2).

3. Set of mould elements (1) according to one of the preceding claims, **characterized in that** the protrusions (5) facing one another are offset in the length direction of the main blade (2).

4. Set of mould elements (1) according to one of the preceding claims, **characterized in that** the protrusions (5) of a series are spaced apart by a variable pitch.

5. Set of mould elements (1) according to one of the preceding claims, **characterized in that** the protrusions (5) are bevelled.

6. Set of mould elements (1) according to one of the preceding claims, **characterized in that** the series of protrusions (52, 53) are inclined.

7. Set of mould elements (1) according to one of the preceding claims, **characterized in that** the protrusions are cubic (50), pyramidal (51), spherical (53), hemispherical or U-shaped (52).

8. Set of mould elements (1) according to one of the preceding claims, **characterized in that** the protrusions (5) represent only 5 to 20% of the weight of the main blade (2).

9. Mould comprising a set of mould elements (1) according to one of the preceding claims.
